# EUROPÄISCHE PATENTANMELDUNG

(11) **EP 1 752 027 A1**
(43) Veröffentlichungstag der Anmeldung: **14.02.2007**
(21) Anmeldenummer: 06016058.7
(22) Anmeldetag: 02.08.2006
(51) Int. Cl.: A01C 5/06, A01C 7/08

(54) **Sämaschine**

(30) Priorität: 10.08.2005 DE 102005038095
(71) Anmelder: Amazonen-Werke H. Dreyer GmbH & Co. KG, 49205 Hasbergen (DE)
(72) Erfinder: Brook, Gebhard, 49429 Wisbek (DE); Steen, Rüdiger, 27798 Hude (DE); Feldhaus, Werner, 27801 Dötlingen/Geveshausen (DE); Tiessen, Reimer Uwe, 26135 Oldenburg (DE)

(57) **Zusammenfassung**

Sämaschine mit einem Rahmen (1) und mehreren daran beabstandet zueinander angeordneten Säscharen (2), denen das auszubringende Saatgut in einstellbaren Mengen zugeführt wird und hinter den Säscharen (2) angeordneten drehbar gelagerten und auf dem Boden abrollenden scheibenartigen Rollen (3) die nebeneinander und beabstandet zueinander angeordnet sind. Um eine vereinfachte und von den Säscharen unabhängige Anordnung der Rollen (3) zu erreichen, ist vorgesehen, dass die Rollen (3) über Tragarme (4) an einem quer zur Fahrtrichtung (5) verlaufenden und am Rahmen (1) befestigten Querträger (7) angeordnet sind.

## Beschreibung

Die Erfindung betrifft eine Sämaschine gemäß des Oberbegriffes des Patentanspruches 1.

Derartige Sämaschinen sind in der Praxis bekannt geworden. Sie weisen einen Rahmen auf, an dem beabstandet zueinander mehrere Säschare angeordnet sind. Diesen Säscharen wird das auszubringende Saatgut über Dosier- und Fördereinrichtungen in einstellbaren Mengen zugeführt. Die Säschare ziehen Säfurchen in den Boden, in welchem das den Säscharen zugeführte Saatgut abgelegt wird. Um insbesondere bei trockenen Verhältnissen einen ausreichenden Bodenanschluss der Saatkörner zwecks optimaler Keimbedingungen zu gewährleisten, sind hinter den Säscharen drehbar gelagerte und auf den Boden abrollende scheibenartige Rollen nebeneinander und beabstandet zueinander angeordnet, die das Saatgut andrücken. Diese Rollen sind mittels Halterungen an den Säscharen befestigt.

Der Erfindung liegt die Aufgabe zugrunde, eine vereinfachte und von den Säscharen unabhängige Anordnung der Rollen zu erreichen.

Diese Aufgabe wird erfindungsgemäß dadurch gelöst, dass die Rollen über Tragarmen an einem quer zur Fahrtrichtung verlaufenden und am Rahmen befestigten Querträger angeordnet sind.

Infolge dieser Maßnahmen sind die Rollen über Tragarme an dem Querträger befestigt und können so gemeinsam in gewünschter Weise mit einem entsprechenden Bodendruck gegen den Boden angestellt werden, so dass die Rollen das Saatgut in der gewünschten Weise in der Säfurche andrücken.

Je nach Einsatzverhältnissen können die Rollen in einer Querreihe oder in zwei hintereinander liegenden Querreihen angeordnet sein.

Um gleichzeitig neben dem andrücken der Saatkörner auch ein fördern von Boden in die Säfurche zum Bedecken der Saatkörner zu erreichen, ist vorgesehen, dass die Rollen mit einem kleinen Winkel schräg zur Fahrtrichtung angestellt sind.

Um ein bedecken des Saatgutes vor dem Andrücken oder nach dem Andrücken durch die Rollen zu erreichen, ist vorgesehen, dass vor und/oder hinter den Rollen ein in den Boden eingreifendes und den Boden bewegendes Element angeordnet ist. Hierbei sind diese Elemente in bevorzugter Weise die in den Boden eingreifenden und in dem Boden bewegenden seitlich der Rollen und seitlich der Säfurche, die von den Säscharen gezogen wird, angeordnet. Um den Boden in einfacher Weise in die Säfurche und auf die angedrückten Saatkörner zu schieben, ist das in den Boden eingreifendes Element als durch den Boden kratzendes Element ausgebildet.

Um die Saatkörner in vorteilhafter Weise in der Säfurche andrücken zu können, ist vorgesehen, dass jedem Säschar eine Rolle, vorzugsweise in fluchtender Weise zugeordnet ist.

Damit die an dem Querbalken angeordneten Rollen sich sehr gut dem Verlauf der Bodenoberfläche bzw. der Säfurche anpassen können, ist vorgesehen, dass die Rollen mittels einer federnden Halterung am Querträger befestigt sind.

Um die Rollen mit einem gewünschten Druck gegen den Boden bzw. die Säfurche anstellen zu können, damit das Saatgut in einer entsprechenden Weise angedrückt wird, ist vorgesehen, dass der Querträger mit den Rollen gegenüber dem Rahmen der Sämaschine mittels einer Verstelleinrichtung verstellbar ist.

Diese Verstellung kann entweder von Hand oder über eine fernbedienbare Verstelleinrichtung vom Schleppersitz aus erfolgen.

Um in jedem Falle ein ausreichendes Andrücken des Saatgutes in der Säfurche zu gewährleisten, ist vorgesehen, dass die Rollen mit einer Vorspannung gegen den Boden ein- und anstellbar sind.

Um das Andrücken bzw. das Schließen der Säfurche an die jeweils herrschenden Einsatzbedingungen, trockene Einsatzverhältnisse, feuchte Einsatzverhältnisse etc. anpassen zu können ist vorgesehen, dass die Rollen mittels des Querträgers vom Boden wegschwenkbar sind. Infolge dieser Maßnahmen kann in einfacher Weise das jeweils optimale den Säscharen nachfolgendes Werkzeug in Einsatz gebracht werden. Auch ist es möglich, dass der Querträger mit den Rollen gegen anders ausgebildete Bpdenbearbeitungswerkzeuge austauschbar ist.

Vorteilhafte Anordnung der Rollen an dem Querträger sind den Ansprüchen 13 und 14 zu entnehmen.

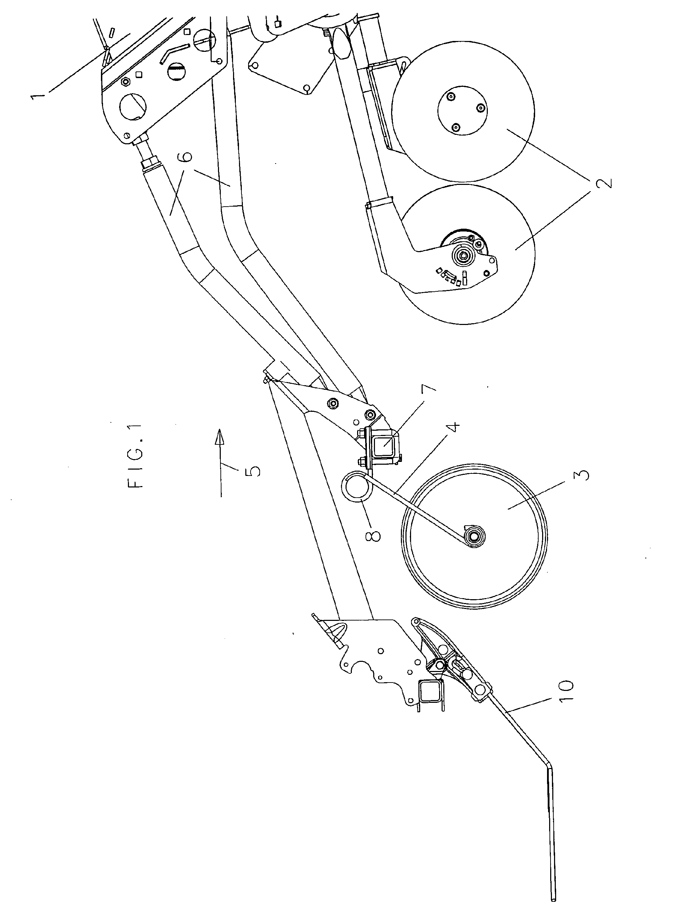

Weitere Einzelheiten der Erfindung sind der Beispielsbeschreibung und den Zeichnungen zu entnehmen. Hierbei zeigen
- Fig. 1: die Sämaschine in Teilansicht mit hinter den Säscharen angeordneten Rollen in Seitenansicht,

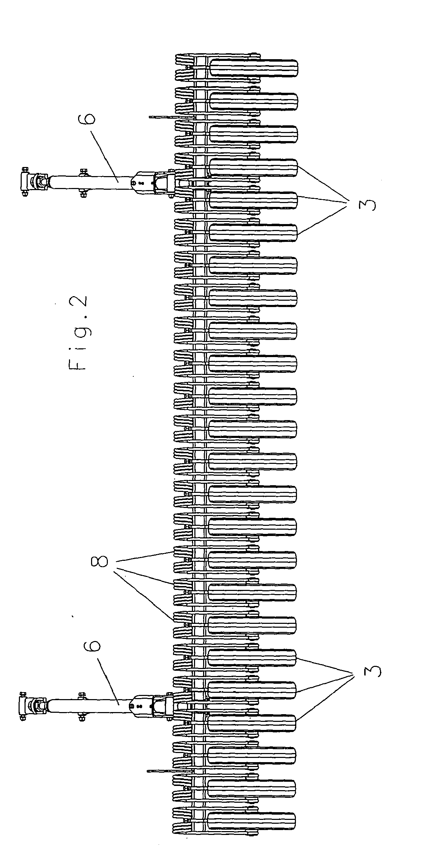

- Fig. 2: die Rollen in der Ansicht von hinten,

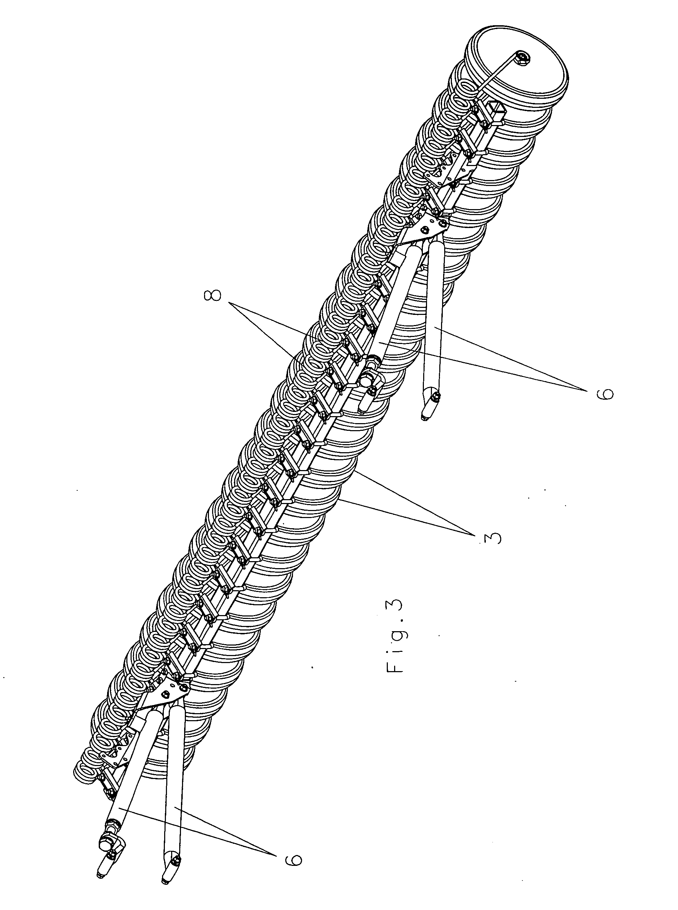

- Fig. 3: die Anordnung der Rollen in perspektivischer Darstellung,
- Fig. 4: eine weitere hinter den Säscharen angeordnete Rollen- und Striegeleinheit in Seitenansicht,

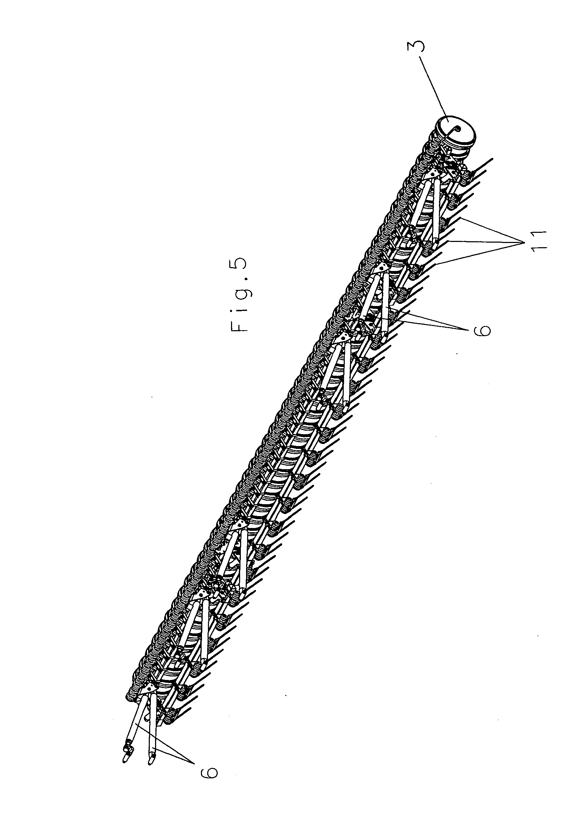

- Fig. 5: die Rollen- und Striegeleinheit gemäß Fig. 4 in perspektivischer Darstellung,
- Fig. 6: die Verstelleinrichtung der Striegel und der Rollen in Seitenansicht und vergrößerter Darstellung,
- Fig. 7: eine andere Rollen- und Striegeleinheit in Seitenansicht,
- Fig. 8: die Rollen- und Striegeleinheit gemäß Fig. 7 in anderer Einstellung.

Die Sämaschine weist den Rahmen 1 mit dem Vorratsbehälter auf. An dem Rahmen 1 sind in zwei Querreihen hintereinander und seitlich versetzt zueinander die Säschare 2 angeordnet. Den Säscharen 2 wird über Saatleitungen und Dosierorganen das sich im Vorratsbehälter befindliche Saatgut in einstellbaren Mengen zugeleitet. Hinter den Säscharen 2 sind die Saatandruckrollen 3 in eine Querreihe hintereinander angeordnet. Diese auf dem Boden abrollenden scheibenartigen Rollen 3 sind nebeneinander und beabstandet zueinander angeordnet und über einen federnden Tragarm 4 an einem quer zur Fahrtrichtung 5 verlaufenden und über das Verbindungsgestänge 6 an dem am Rahmen 1 befestigten Querträger 7 angeordnet. Die Rollen 3 sind, in Ansicht von hinten gesehen, fluchtend zu den Säscharen 2 angeordnet, so dass jeweils eine Rolle 3 einem Säschar 2 zugeordnet ist und die von den in den Säscharen 2 gezogenen Säfurche abgelegten Saatkörner andrücken. Aufgrund der Federwindung 8 in dem Tragarm 4 und der Anordnung des Querträgers 7 über das Verbindungsgestänge 6 an dem Rahmen 1 sind die Rollen 3 mit einer Vorspannung gegen den Boden angeordnet.

Zusätzlich kann hinter den Rollen 3 die eingezeichneten Striegelelemente 10 angeordnet sein.

In nicht dargestellter Weise können die Rollen 3 mit einem kleinen Winkel schräg zur Fahrtrichtung 5 angestellt sein und so Boden in die Säfurche schieben, um das Saatgut zu bedecken und gleichzeitig das Saatgut und den in die Säfurche geschobenen Boden andrücken.

Des weiteren ist es möglich, in nicht dargestellter Weise, die Rollen in zwei hintereinander liegenden Querreihen anzuordnen.

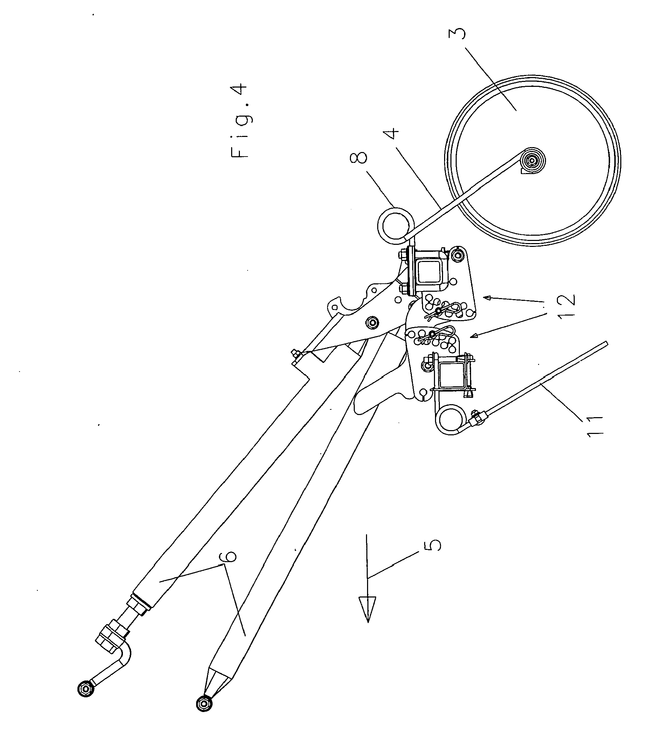

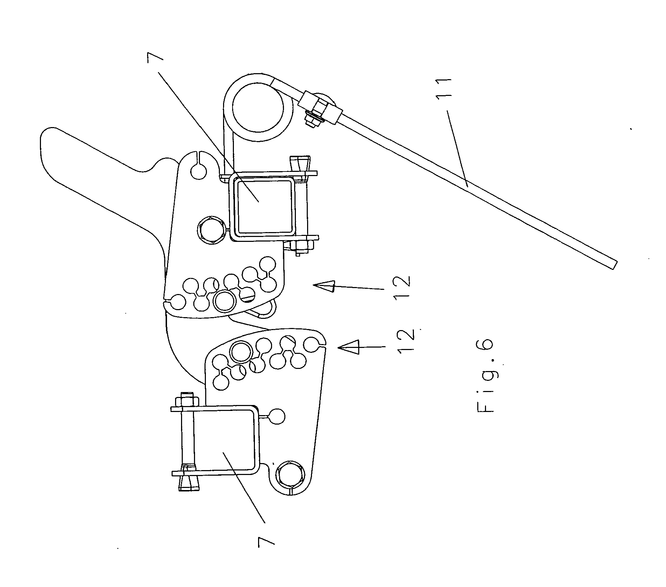

Bei dem Ausführungsbeispiel gemäß Fig. 4 sind vor den Rollen 3 und hinter den Säscharen 2 in den Boden eingreifende und bodenbewegende Elemente angeordnet. Diese Elemente 11 sind als Striegel ausgebildet und können, wie insbesondere in Fig. 6 dargestellt ist, im Winkel zum Boden eingestellt werden, um so eine mehr oder wenigere Aggressivität des Striegelelementes 11 zu erreichen. Diese Striegelelemente 11 sind nebeneinander angeordnet und kratzen Boden in die Säfurche um das Saatgut zu bedecken. Die Anstellung der Rollen 4 und der Striegelelemente 11 kann mittels der Einstellvorrichtung 12, wie Fig. 4 und 6 zeigen, eingestellt werden.

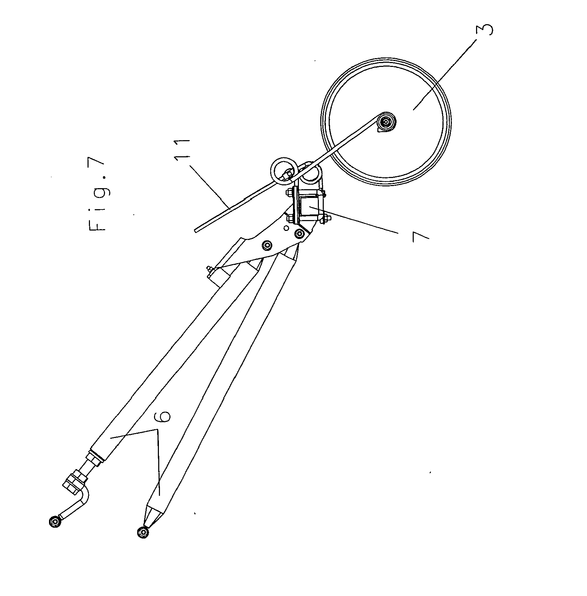

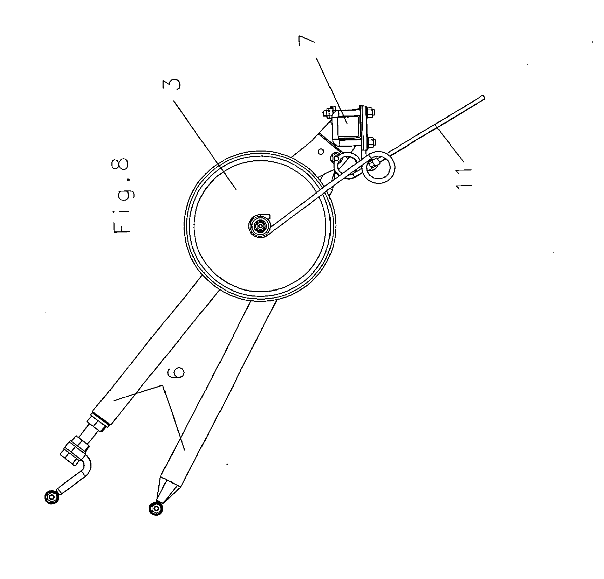

Bei dem Ausführungsbeispiel gemäß Fig. 7 sind an dem Querträger 7 in einer Reihe nebeneinander drehbar angeordnete scheibenartige Rollen 3 und gegenüberliegend quer zur Fahrtrichtung 5 Striegelelemente 11 angeordnet. In der in Fig. 7 dargestellten Stellung haben die Rollen 3 Bodenkontakt, während die Striegelelemente 11 außer Betrieb sind. Bei anderen Einsatzfällen, wenn das Saatgut nicht angedrückt werden soll, kann der Querbalken 7 mit den Rollen 3 und dem Striegel 11 um 180 Grad um seine Längsachse gedreht werden, so dass die Rollen 3 außer Betrieb sind und die Striegelelemente 11 in den Boden eingreifen, wie Fig. 8 zeigt.

In nicht dargestellter Weise können die Rollen 3 über Haltearme am Querträger 7 derartig befestigt werden, dass jeweils zwei Rollen an einem Haltearm befestigt sind und jede Rolle einem vorlaufenden Säschar zugeordnet ist.

Weiterhin können in nicht dargestellter Weise die Rollen über Haltearme am Querträger derartig befestigt sein, dass an jedem Haltearm in beabstandeter Weise vier Rollen angeordnet sind und das jede einem vorlaufenden Säschar zugeordnet ist.

## Patentansprüche

1. Sämaschine mit einem Rahmen und mehreren daran beabstandet zueinander angeordneten Säscharen, denen das auszubringende Saatgut in einstellbaren Mengen zugeführt wird und hinter den Säscharen angeordneten drehbar gelagerten und auf dem Boden abrollenden scheibenartigen Rollen die nebeneinander und beabstandet zueinander angeordnet sind, **dadurch gekennzeichnet, dass** die Rollen (3) über Tragarme (4) an einem quer zur Fahrtrichtung (5) verlaufenden und am Rahmen (1) befestigten Querträger (7) angeordnet sind.

2. Sämaschine nach Anspruch 1, **dadurch gekennzeichnet, dass** die Rollen (3) in einer Querreihe angeordnet sind.

3. Sämaschine nach Anspruch 1, **dadurch gekennzeichnet, dass** die Rollen (3) in zwei hintereinander liegenden Querreihen angeordnet sind.

4. Sämaschine nach Anspruch 1, **dadurch gekennzeichnet, dass** die Rollen (3) mit einem kleinen Winkel schräg zur Fahrtrichtung angestellt sind.

5. Sämaschine nach einem oder mehreren der vorstehenden Ansprüche, **dadurch gekennzeichnet, dass** vor und/oder hinter den Rollen (3) ein in den Boden eingreifendes und den Boden bewegendes Element (11) angeordnet ist.

6. Sämaschine nach Anspruch 5, **dadurch gekennzeichnet, dass** das in den Boden eingreifendes Element (11) als durch den Boden kratzendes Element ausgebildet ist.

7. Sämaschine nach einem oder mehreren der vorstehenden Ansprüche, **dadurch gekennzeichnet, dass** jedem Säschar (2), eine Rolle (3), vorzugsweise in fluchtender Weise zugeordnet ist.

8. Sämaschine nach einem oder mehreren der vorstehenden Ansprüche, **dadurch gekennzeichnet, dass** die Rollen (3) mittels einer federnden Halterung (4) am Querträger (7) befestigt sind.

9. Sämaschine nach einem oder mehreren der vorstehenden Ansprüche, **dadurch gekennzeichnet, dass** der Querträger (7) mit den Rollen (3) gegenüber dem Rahmen (1) der Sämaschine mittels einer Verstelleinrichtung (11) verstellbar ist.

10. Sämaschine nach einem oder mehreren der vorstehenden Ansprüche, **dadurch gekennzeichnet, dass** die Rollen (3) mit einer Vorspannung gegen den Boden einstellbar sind.

11. Sämaschine nach einem oder mehreren der vorstehenden Ansprüche, **dadurch gekennzeichnet, dass** die Rollen (3) mittels des Querträgers (7) vom Boden wegschwenkbar sind.

12. Sämaschine nach einem oder mehreren der vorstehenden Ansprüche, **dadurch gekennzeichnet, dass** der Querträger (7) mit den Rollen (3) anders ausgebildete Bodenbearbeitungswerkzeuge (11) austauschbar ist.

13. Sämaschine nach einem oder mehreren der vorstehenden Ansprüche, **dadurch gekennzeichnet, dass** die Rollen über Haltearme am Querträger befestigt sind, dass jeweils zwei Rollen an einem Haltearm befestigt sind, und jede Rolle einem vorlaufendem Säschar zugeordnet ist.

14. Sämaschine nach einem oder mehreren der vorstehenden Ansprüche, **dadurch gekennzeichnet, dass** die Rollen über Haltearme am Querträger befestigt sind, dass an jedem Haltearm in beabstandeter Weise vier Rollen angeordnet sind, dass jede einem vorlaufendem Säschar zugeordnet ist.
